(19) Europäisches Patentamt
European Patent Office
Office européen des brevets

(11) **EP 4 557 780 A1**

(12) **EUROPEAN PATENT APPLICATION**
published in accordance with Art. 153(4) EPC

(43) Date of publication:
**21.05.2025 Bulletin 2025/21**

(21) Application number: **23864388.6**

(22) Date of filing: **13.06.2023**

(51) International Patent Classification (IPC):
**H04W 4/029** (2018.01)

(52) Cooperative Patent Classification (CPC):
**H04W 4/029; H04W 24/08; H04W 72/51;
H04W 72/542**

(86) International application number:
**PCT/CN2023/099928**

(87) International publication number:
**WO 2024/055649 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 CN 202211117732**

(71) Applicant: **ZTE Corporation
Shenzhen, Guangdong 518057 (CN)**

(72) Inventors:
• **WANG, Zhongbin
Shenzhen, Guangdong 518057 (CN)**
• **XIA, Shuqiang
Shenzhen, Guangdong 518057 (CN)**

• **CHEN, Shijun
Shenzhen, Guangdong 518057 (CN)**
• **YU, Guanghui
Shenzhen, Guangdong 518057 (CN)**
• **HU, Liujun
Shenzhen, Guangdong 518057 (CN)**
• **JIN, Shi
Shenzhen, Guangdong 518057 (CN)**
• **YANG, Jie
Shenzhen, Guangdong 518057 (CN)**
• **HUANG, Yixuan
Shenzhen, Guangdong 518057 (CN)**

(74) Representative: **Aipex B.V.
Vestdijk 51
5611 CA Eindhoven (NL)**

(54) **TERMINAL POSITIONING AND SENSING METHOD, ELECTRONIC DEVICE AND STORAGE MEDIUM**

(57) Provided are a terminal positioning and sensing method, an electronic device and a storage medium. The method includes: performing a channel estimation according to a received echo signal, and acquiring a channel parameter of the channel estimation; determining a line-of-sight path measurement parameter and a non-line-of-sight path measurement parameter based on the channel parameter; determining an association relationship matrix of the line-of-sight path measurement parameter and the non-line-of-sight path measurement parameter according to a preset echo geometric model; and determining positioning information and environment sensing information based on the association relationship matrix. In the present application, the determination of location information of a user equipment and the sensing of environmental information are simultaneously achieved through line-of-sight path measurement information and non-line-of-sight path measurement information, thereby increasing the positioning accuracy, enhancing the richness of communication information, and improving the usage experience of a user.

Perform channel estimation according to a received echo signal, and acquire a channel parameter of the channel estimation — 110

Determine a line-of-sight path measurement parameter and a non-line-of-sight path measurement parameter based on the channel parameter — 120

Determine an association relationship matrix of the line-of-sight path measurement parameter and the non-line-of-sight path measurement parameter according to a preset echo geometric model — 130

Determine positioning information and environmental sensing information based on the association relationship matrix — 140

**FIG. 2**

EP 4 557 780 A1

**Description**

TECHNICAL FIELD

The present application relates to the field of wireless communications and, in particular, to a terminal positioning and sensing method, an electronic device and a storage medium.

BACKGROUND

As the 5th generation mobile communication technology (5G) is widely promoted worldwide, a large bandwidth provided by a millimeter wave spectrum, the transmission with high directivity provided by Massive multiple-input multiple-output (MIMO), and densely deployed base stations (BSs) provide users with a communication network having a high data transmission rate and a wide coverage. For the upcoming next-generation wireless communication network, it is becoming a trend to achieve environment sensing by sharing the hardware and software resources of a cellular network. Since a more reliable communication capability can provide more accurate measurement information for sensing, communication and sensing in the next-generation wireless communication network complement each other to provide users with faster and more reliable services. Many studies have been conducted on the positioning of a user equipment (UE) currently. The positioning of the UE may generally be achieved based on line-of-sight (LOS) path measurement of a system. In the next-generation wireless communication network, the non-line-of-sight (NLOS) path measurement is also required to achieve the positioning of the UE, and in addition, the adopted NLOS path measurement information is necessary for achieving environment sensing. At present, certain environmental information may be captured over the NLOS path during propagation. Such environmental information may be used for the sensing of motions and postures and the positioning of scatterers. Moreover, with the deployment of large-scale antenna arrays and the allocation of high-frequency spectrum, the BS in a millimeter wave wireless communication system greatly enhances the resolution of a channel in the angle domain and the delay domain, thereby providing the basis for simultaneously achieving positioning and environment sensing. However, the current studies in the 5th generation mobile communication technology mainly focus on the positioning of UEs, and the positioning of the scatterer does not draw much attention.

SUMMARY

The main object of embodiments of the present application is to provide a terminal positioning and sensing method, an electronic device and a storage medium to simultaneously achieve the determination of location information of a UE and the sensing of environmental information through LOS path measurement information and NLOS path measurement information, thereby increasing the positioning accuracy, enhancing the richness of communication information, and improving the usage experience of a user.

The embodiments of the present application provide a terminal positioning and sensing method. The method includes the following.

A channel estimation is performed according to a received echo signal, and a channel parameter of the channel estimation is acquired.

A LOS path measurement parameter and a NLOS path measurement parameter are determined based on the channel parameter.

An association relationship matrix of the LOS path measurement parameter and the NLOS path measurement parameter is determined according to a preset echo geometric model.

Positioning information and environment sensing information are determined based on the association relationship matrix.

The embodiments of the present application further provide an electronic device. The electronic device includes one or more processors and a memory.

The memory is configured to store one or more programs.

The one or more programs, when executed by the one or more processors, cause the one or more processors to perform the terminal positioning and sensing method described in any of the embodiments of the present application.

The embodiments of the present application further provide a computer-readable storage medium for storing one or more programs, where when the one or more programs are executed by a processor, the terminal positioning and sensing method described in any of the embodiments of the present application is performed.

BRIEF DESCRIPTION OF DRAWINGS

FIG. 1 is a schematic diagram of a scenario for terminal positioning and sensing according to an embodiment of the present application;

FIG. 2 is a flowchart of a terminal positioning and sensing method according to an embodiment of the present application;

FIG. 3 is another flowchart of a terminal positioning and sensing method according to an embodiment of the present application;

FIG. 4 is an example diagram of a terminal positioning and sensing method according to an embodiment of the present application;

FIG. 5 is a structure diagram of a terminal positioning and sensing apparatus according to an embodiment of the present application; and

FIG. 6 is a structure diagram of an electronic device according to an embodiment of the present application.

DETAILED DESCRIPTION

Suffixes such as "module", "part" or "unit" used to indicate elements in the subsequent description are merely used to facilitate the description of the present application and have no particular meaning in themselves. Therefore, "module", "part" or "unit" may be used in a mixed manner.

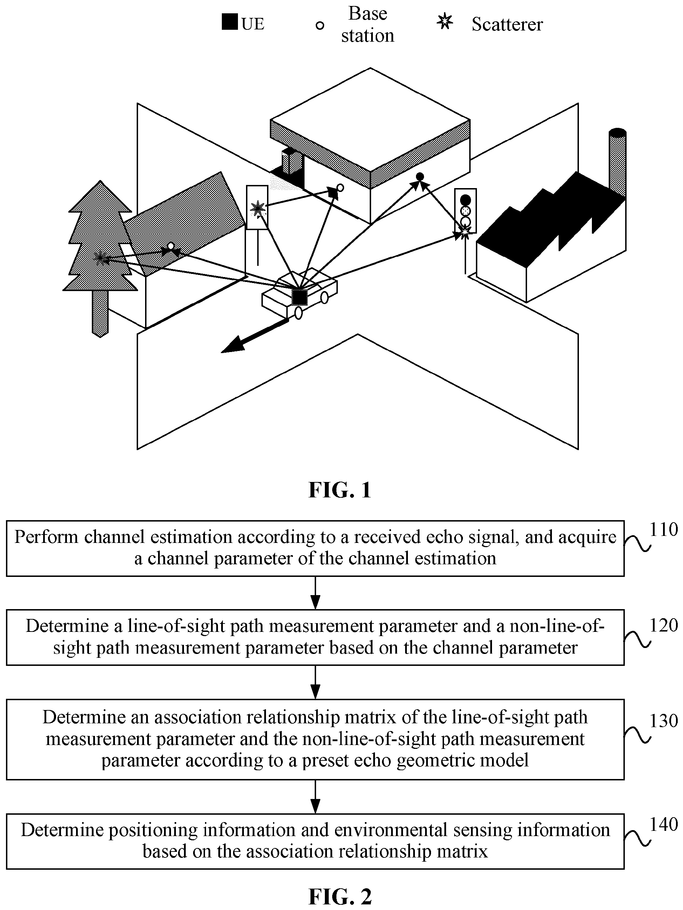

FIG. 1 is a schematic diagram of a scenario for terminal positioning and sensing according to an embodiment of the present application. A BS performs uplink communication with a terminal. Multiple scatterers exist in the entire transmission, and the scatterers may include buildings, trees, moving targets, and the like. In a millimeter wave communication system, the path loss becomes severe. In this scenario, only a LOS path and a NLOS path with a single reflection are considered. Part of a signal sent by the UE directly arrives at the BS to form the LOS path, and the other part of the signal is reflected by a scatterer and arrives at the BS to form the NLOS path with a signal reflection. The BS may perform a channel estimation based on an echo signal to acquire the LOS path parameter information and NLOS path parameter information over the uplink channel from the terminal to the BS. The acquired parameter information may be used for constructing a matrix for an uplink channel space. Specifically, the coordinates of a BS may be defined as $b_n$, where n = 1, 2, ..., N, and it is assumed that the clocks of N BSs are completely synchronized. u° denotes a location of the UE, and u° denotes a velocity of the UE. Assuming that the location of the l-th scatterer between an n-th BS and the UE is $\overset{\circ}{s}_{n,l}$, a total of $N_s = \sum_{i=1}^{N} L_n$ scatterers exist, where $L_n$ denotes the number of scatterers corresponding to the n-th BS. Then a multi-path channel may be modeled as:

$$H_n(t,f) = \sum_{l=0}^{L_n} \overset{\circ}{g}_{n,l} e^{j2\pi(v_{n,l}t - \tau_{n,l}f)} \times a_r\left(\overset{\circ}{\phi}_{r,n,l}, \overset{\circ}{\theta}_{r,n,l}\right) a_t^H\left(\overset{\circ}{\phi}_{t,n,l}, \overset{\circ}{\theta}_{t,n,l}\right) \tag{1}$$

In the above equation, $\overset{\circ}{g}_{n,l}$, $v_{n,l}$, and $\tau_{n,l}$ denote a gain, a Doppler frequency, and a delay of an l-th path, respectively, $\overset{\circ}{\phi}_{r,n,l}$, $\overset{\circ}{\theta}_{r,n,l}$, $\overset{\circ}{\phi}_{t,n,l}$, and $\overset{\circ}{\theta}_{t,n,l}$ denote an azimuthal angle of arrival (AOA), a pitch AOA, an azimuthal angle of departure (AOD), and a pitch AOD of the l-th path, respectively, and $a_r\left(\overset{\circ}{\phi}_{r,n,l}, \overset{\circ}{\theta}_{r,n,l}\right)$ and $a_t\left(\overset{\circ}{\phi}_{t,n,l}, \overset{\circ}{\theta}_{t,n,l}\right)$ denote a received steering vector and a transmitted steering vector, respectively. In Equation (1), when l = 0, the equation represents a LOS path model, when l = 1, 2, ..., $L_n$, the equation represents a NLOS path model.

FIG. 2 is a flowchart of a terminal positioning and sensing method according to an embodiment of the present application. The embodiment of the present application is applicable to the determination of the location information of a terminal and the sensing of environmental information. The method may be performed by a terminal positioning and sensing apparatus. The apparatus may be implemented by software and/or hardware. With reference to FIG. 2, the method provided by the embodiment of the present application specifically includes the following procedures 110 to 140.

In procedure 110, channel estimation is performed according to a received echo signal, and a channel parameter of the channel estimation is acquired.

The echo signal may be a signal that arrives at a BS through different transmission paths. The echo signal may include a signal sent by a terminal that directly arrives at the BS and a signal sent by the terminal that is reflected only by one scatterer and then arrives at the BS. The channel parameter may be information reflecting a transmission state of the signal and may include a path gain, a Doppler frequency, a delay, and an angle.

In the embodiment of the present application, the echo signal may be received, and the channel estimation may be performed on the echo signal to determine the channel parameter such as a path gain, a Doppler frequency, a delay, and an angle.

In procedure 120, a LOS path measurement parameter and a NLOS path measurement parameter are determined based on the channel parameter.

In the embodiment of the present application, the LOS path measurement parameter and the NLOS path measurement parameter may be determined according to the determined channel parameter. In an embodiment, an uplink channel space may be determined according to the determined channel parameter, and the LOS path measurement parameter and the NLOS path measurement parameter are determined through the acquired channel parameter in the uplink channel space. For example, the LOS path measurement parameter may be determined through a time of arrival and a Doppler frequency of the signal at the BS.

In procedure 130, an association relationship matrix of the LOS path measurement parameter and the NLOS path measurement parameter is determined according to a preset echo geometric model.

The preset echo geometric model may be a model for an uplink spatial geometric relationship. The preset echo geometric model may be determined by a positional relationship among a BS, a scatterer, and a UE in the space. The association relationship matrix may include information identifying the association relationship between the LOS path measurement parameter and the NLOS path measurement parameter. The elements in the association relationship matrix may include the LOS path measurement parameter, the NLOS path measurement parameter, positioning information, and environment sensing information.

In the embodiment of the present application, a correspondence between the LOS path measurement parameter and the NLOS path measurement parameter may be determined according to the spatial geometric relationship in the preset echo geometric model, and the correspondence may be expressed as the association relationship matrix.

In procedure 140, positioning information and environment sensing information are determined based on the association relationship matrix.

In the embodiment of the present application, the positioning information and the environment sensing information may be determined by processing the association relationship matrix. The positioning information may identify the location of a UE and the moving velocity of the UE. The environment sensing information may include the location information of the scatterer. In an example embodiment, the positioning information and the environment sensing information may be determined through the association relationship matrix in the following manner: the association relationship matrix is solved through the weighted least squares (WLS) method, or the positioning information and the environment sensing information may also be determined through a gradient descent method.

In the embodiment of the present application, a channel estimation is performed according to a received echo signal to determine a channel parameter, a LOS path measurement parameter and a NLOS path measurement parameter are determined according to the channel parameter, an association relationship matrix of the LOS path measurement parameter and the NLOS path measurement parameter is determined according to an echo geometric model, and positioning information and environment sensing information are determined by solving the association relationship matrix. In the embodiment of the present application, the determination of location information of a UE and the sensing of environmental information are simultaneously achieved through LOS path measurement information and NLOS path measurement information, thereby increasing the positioning accuracy, enhancing the richness of communication information, and improving the usage experience of the user.

In an example embodiment, the channel parameter includes at least one of: a path gain, a Doppler frequency, a delay or an angle.

In some embodiments, the LOS path measurement parameter includes at least one of: a time-difference-of-arrival (TDOA) parameter, a frequency-difference-of-arrival (FDOA) parameter or an AOA parameter.

In some embodiments, the NLOS path measurement parameter includes at least one of: an AOA parameter or an AOD parameter.

In some embodiments, the positioning information includes the location information of the terminal and the velocity information of the terminal, and the environment sensing information includes the location information of the scatterer.

In some embodiments, the preset echo geometric model includes at least one of the following: a LOS path TDOA measurement parameter equation; a LOS path FDOA measurement parameter equation; a LOS path AOA measurement parameter equation; a NLOS path AOA measurement parameter equation; or a NLOS path AOD measurement parameter equation.

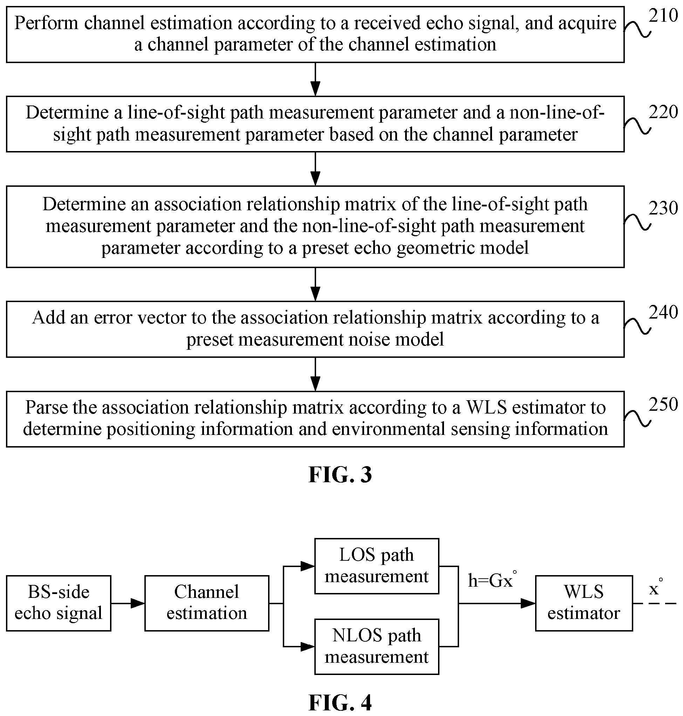

FIG. 3 is another flowchart of a terminal positioning and sensing method according to an embodiment of the present application. The embodiment of the present application is an embodiment based on the above embodiments of the present application. With reference to FIG. 3, the method provided by the embodiment of the present application specifically includes the following procedures 210 to 250.

In procedure 210, channel estimation is performed according to a received echo signal, and a channel parameter of the channel estimation is acquired.

In procedure 220, a LOS path measurement parameter and a NLOS path measurement parameter are determined based on the channel parameter.

In procedure 230, an association relationship matrix of the LOS path measurement parameter and the NLOS path measurement parameter is determined according to a preset echo geometric model.

In procedure 240, an error vector is added to the association relationship matrix according to a preset measurement noise model.

The error vector may include an error caused when the communication model is affected by noise. The preset measurement noise model may be a model used for adding a noise influence to the preset echo geometric model. The preset measurement noise model may be determined by Gaussian white noise.

In the embodiment of the present application, due to the presence of noise in the channel for signal transmission in the actual communication environment, Gaussian white noise with a covariance of Q may be taken as the preset measurement noise model, and an error vector may be added to the determined association relationship matrix according to the preset measurement noise model so that the association relationship matrix of the LOS path measurement parameter and the NLOS path measurement parameter may be affected by noise.

In procedure 250, the association relationship matrix is parsed according to a WLS estimator to determine positioning information and environment sensing information.

The WLS estimator may have the WLS method built-in. The estimator may weight a to-be-solved model into a new model without heteroscedasticity and then perform estimation solution by using least squares estimation.

In the embodiment of the present application, the association relationship matrix may be solved by using a preset WLS estimator to determine the positioning information and the environment sensing information.

Further, in some embodiments, positioning and environment sensing may be performed only through NLOS path measurement information. At this point, the number of NLOS paths is required to be greater than or equal to 3, and the NLOS paths are required to be measured by at least two BSs. In this manner, the positioning of the UE and the environment sensing may be achieved by the known locations of the BSs.

FIG. 4 is an example diagram of a terminal positioning and sensing method according to an embodiment of the present application. With reference to FIG. 4, the process of terminal positioning and sensing may include the following procedures 1 to 11.

Procedure 1: A channel estimation is performed based on an echo signal received by a BS, a LOS path measurement parameter is acquired by using a channel parameter, and with a time of arrival and a Doppler frequency at a first BS as references, a TDOA parameter and an FDOA parameter are acquired, respectively:

$$r_{n1}^{\circ} = v\left(\tau_{n,0}^{\circ} - \tau_{1,0}^{\circ}\right) = r_{n}^{\circ} - r_{1}^{\circ}, r_{n}^{\circ} = v\left(\tau_{n,0}^{\circ} - \omega\right) = \|u^{\circ} - b_{n}\| \qquad (2)$$

$$\dot{r}_{n1}^{\circ} = \lambda\left(v_{n,0}^{\circ} - v_{1,0}^{\circ}\right) = \dot{r}_{n}^{\circ} - \dot{r}_{1}^{\circ}, \dot{r}_{n}^{\circ} = \frac{\partial r_{n}^{\circ}}{\partial t} = \frac{\dot{u}^{\circ T}(u^{\circ} - b_{n})}{\|u^{\circ} - b_{n}\|} \qquad (3).$$

In the above equations, v denotes a propagation velocity of a wireless signal, $\tau_{n,0}^{\circ}$ denotes a LOS path delay of an n-th BS, $r_{n}^{\circ}$ denotes a distance between a UE and the n-th BS, $\omega$ denotes a clock offset between the BS and the UE, $\lambda$ denotes a wavelength of the wireless signal, $v_{n,0}^{\circ}$ denotes a Doppler shift of the n-the BS, and $\dot{r}_{n}^{\circ}$ denotes a relative velocity of the n-th BS and the UE.

An AOA parameter of the LOS path is acquired according to an angle relationship:

$$\phi_{r,n,0}^{\circ} = \arctan\frac{y^{\circ} - y_{n}^{b}}{x^{\circ} - x_{n}^{b}}, \theta_{r,n,0}^{\circ} = \arcsin\frac{z^{\circ} - z_{n}^{b}}{\|u^{\circ} - b_{n}\|} \qquad (4).$$

In the above equation, the location coordinates of the UE are $(x^{\circ}, y^{\circ}, z^{\circ})$, and the location coordinates of the nth BS are $(x_{n}^{b}, y_{n}^{b}, z_{n}^{b})$.

In the embodiment of the present application, an AOD parameter of the LOS path is equivalent to the AOA parameter and will not be described here.

Procedure 2: A NLOS path measurement parameter is acquired by using the channel parameter. The NLOS path measurement parameter mainly includes an AOA parameter and an AOD parameter:

$$\phi_{r,n,l}^{\circ} = \arctan \frac{y_{n,l}^{s} - y_{n}^{b}}{x_{n,l}^{s} - x_{n}^{b}}, \theta_{r,n,l}^{\circ} = \arcsin \frac{z_{n,l}^{s} - z_{n}^{b}}{\|s_{n,l}^{\circ} - b_{n}\|} \qquad (5)$$

$$\phi_{t,n,l}^{\circ} = \arctan \frac{y^{\circ} - y_{n,l}^{so}}{x^{\circ} - x_{n,l}^{so}}, \theta_{t,n,l}^{\circ} = \arcsin \frac{z^{\circ} - z_{n,l}^{so}}{\|u^{\circ} - s_{n,l}^{\circ}\|} \qquad (6).$$

In the above equations, $(x_{n,l}^{so}, y_{n,l}^{so}, z_{n,l}^{s})$ denotes the location coordinates of an l-th scatterer associated with the n-th BS, and $s_{n,l}^{\circ}$ denotes a location vector of the l-th scatterer associated with the n-th BS.

Due to the different transmission paths corresponding to the AOA parameter and the AOD parameter of the NLOS path, the geometric relationships corresponding to the AOA parameter and the AOD parameter are also different.

Procedure 3: A channel LOS path TDOA measurement parameter equation is established. As $r_{n}^{\circ} = r_{1}^{\circ} + r_{n1}^{\circ}$ is known, both sides of the equation are squared simultaneously to obtain $(r_{n1}^{\circ})^2 + 2r_{n1}^{\circ}r_{1}^{\circ} = (r_{n}^{\circ})^2 - (r_{1}^{\circ})^2$, and due to $r_{n}^{\circ} = \|u^{\circ} - b_{n}\|$, then the following equation is obtained:

$$(r_{n1}^{\circ})^2 + 2r_{n1}^{\circ}r_{1}^{\circ} = b_{n}^{T}b_{n} - b_{1}^{T}b_{1} - 2(b_{n} - b_{1})^{T}u^{\circ} \qquad (7).$$

An angle vector $a_{1}^{\circ} = [\cos\theta_{r,1,0}^{\circ}\cos\phi_{r,1,0}^{\circ}, \cos\theta_{r,1,0}^{\circ}\sin\phi_{r,1,0}^{\circ}, \sin\theta_{r,1,0}^{\circ}\sin\phi_{r,1,0}^{\circ}]$ is imported, and then both sides of the equation obtained above are multiplied simultaneously by $a_{1}^{\circ T}a_{1}^{\circ}$ to obtain the following equation:

$$(r_{n1}^{\circ})^2 - 2r_{n1}^{\circ}a_{1}^{\circ T}b_{1} - b_{n}^{T}b_{n} + b_{1}^{T}b_{1} = 2[(b_{1} - b_{n})^{T} - r_{n1}^{\circ}a_{1}^{\circ T}]u^{\circ} \qquad (8).$$

Since the TDOA measurement is performed with the first BS as the reference, N - l TDOA measurement equations may be established.

Procedure 4: A channel LOS path FDOA measurement parameter equation is established:

$$\dot{r}_{n1}^{\circ}r_{n1}^{\circ} - \dot{r}_{n1}^{\circ}a_{1}^{\circ T}b_{1} = -\dot{r}_{n1}^{\circ}a_{1}^{\circ T}u^{\circ} + [(b_{1} - b_{n})^{T} - r_{n1}^{\circ}a_{1}^{\circ T}]\dot{u}^{\circ} \qquad (9).$$

Similarly, since the FDOA measurement is performed with the first BS as the reference, N - l FDOA measurement equations may be established.

Procedure 5: A channel LOS path AOA measurement parameter equation is established:

$$c_{n}^{\circ T}b_{n} = c_{n}^{\circ T}u^{\circ}, d_{n}^{\circ T}b_{n} = d_{n}^{\circ T}u^{\circ} \qquad (10).$$

In the above equations, $c_{n}^{\circ} = [-\sin\phi_{n}^{\circ}, \cos\phi_{n}^{\circ}, 0]^{T}$, and $d_{n}^{\circ} = [-\sin\theta_{n}^{\circ}\cos\phi_{n}^{\circ}, -\sin\theta_{n}^{\circ}\sin\phi_{n}^{\circ}, \cos\theta_{n}^{\circ}]^{T}$.

Since the pitch AOA measurement information and the azimuthal AOA measurement information of N BSs are obtained, 2N AOA measurement equations may be established.

Procedure 6: A channel NLOS path AOA measurement parameter equation is established:

$$c_{n,l}^{so T}b_{n} = c_{n,l}^{so T}s_{n,l}^{\circ}, d_{n,l}^{so T}b_{n} = d_{n,l}^{so T}s_{n,l}^{\circ} \qquad (11).$$

In the above equation, $c_{n,l}^{so} = [-\sin\phi_{r,n,l}^{\circ}, \cos\phi_{r,n,l}^{\circ}, 0]^{T}$, and $d_{n,l}^{so} =$

$$\left[- \sin \theta^\circ_{r,n,l} \cos \phi^\circ_{r,n,l}, - \sin \theta^\circ_{r,n,l} \sin \phi^\circ_{r,n,l}, \cos \theta^\circ_{r,n,l}\right]^{\mathrm{T}}$$ . Since the AOA measurement information of $N_s$ NLOS paths is acquired, $2 N_s$ NLOS path AOA measurement equations may be established.

Procedure 7: A channel NLOS path AOD measurement parameter equation is established:

$$z^{soT}_{n,l} s^\circ_{n,l} = z^{soT}_{n,l} u^\circ, f^{soT}_{n,l} s^\circ_{n,l} = f^{so}_{n,l} u^\circ \tag{12}.$$

In the above equation,

$$z^{so}_{n,l} = \left[- \sin \phi^\circ_{t,n,l} \cos \phi^\circ_{t,n,l}, 0\right]^{\mathrm{T}},$$

$$f^{s,l}_{n,l} = \left[- \sin \theta^\circ_{t,n,l} \cos \phi^\circ_{t,n,l} - \sin \theta^\circ_{t,n,l} \sin \phi^\circ_{t,n,l}, \cos \theta^\circ_{t,n,l}\right]^{\mathrm{T}}.$$

Since the AOD measurement information of $N_s$ NLOS paths is acquired, $2N_s$ NLOS path AOD measurement equations may be established.

Procedure 8: The above pseudo-linear equations (8), (9), (10), (11), and (12) are arranged into a matrix form:

$$h = Gp^\circ \tag{13}.$$

In the above equation, $p^\circ = [u^\circ, \dot{u}^\circ, s^\circ]^{\mathrm{T}}$, $s^\circ = [s^{\circ\mathrm{T}}_1, \ldots, s^\circ_N]^{\mathrm{T}}$, $s^\circ_n = \left[s^\circ_{n,1}, \ldots, s^\circ_{n,L_n}\right]^{\mathrm{T}}$, h is a term which does not contain $p^\circ$ in the above pseudo-linear equations, and G is a coefficient matrix of $p^\circ$.

Procedure 9: In the above case, the number of pseudo-linear equations is $4(N + N_s) - 2$, and the number of to-be-estimated parameters is $6 + 3N_s$. Generally, the number of equations is larger than the number of to-be-estimated parameters, and different channel parameters have different estimation variances. Therefore, the above overdetermined problem is solved by using a WLS estimator.

Procedure 10: In an actual environment, the channel cannot be noise-free. Assuming that the measurement noise is modeled as $m = m^\circ + \Delta m$, where $\Delta m$ denotes a Gaussian white noise with a mean value of zero and a covariance matrix of Q, the linear equation $h = Gp^\circ$ is substituted with noise-containing measurement to obtain an error vector:

$$e = \tilde{h} - \tilde{G}p^\circ \tag{14}.$$

In the above equation, $\tilde{h}$ and $\tilde{G}$ denote containing measurement noise.

Procedure 11: the solution of the to-be-estimated parameter solved by using the WLS estimator is:

$$p = \left(\tilde{G}^{\mathrm{T}} W \tilde{G}\right)^{-1} \tilde{G}^{\mathrm{T}} W \tilde{h} \tag{15}.$$

In the above equation, $W = \left(\mathbb{E}\{ee^{\mathrm{T}}\}\right)^{-1}$ is a weighting matrix. With the quadratic term and the higher-order term of e ignored, e may be approximated as:

$$e \approx B\Delta m \tag{16}.$$

In the above equation, the analytical solution of the matrix B may be solved by Taylor expansion of the error vector e. Finally, the weighting matrix is expressed as $W = (BQB^{\mathrm{T}})^{-1}$.

In the actual solution process, since the matrix B is related to the to-be-solved parameters, the weighting matrix W cannot be obtained directly. The weighting matrix $W^{(0)} = Q^{-1}$ is first initialized, an initial estimation of the UE and an initial estimation of a scatterer are obtained by using the WLS estimator, then the matrix B is obtained according to the initial estimation results, and the weighting matrix W is updated according to the matrix B. A more accurate solution may be obtained by carrying out the above iterative process once or twice.

In the embodiment of the present application, through the combination of the LOS path measurement information and the NLOS path measurement information, the UE and the scatterer may be simultaneously positioned by only using the WLS estimator, thereby simplifying the information estimation process and reducing the system processing overhead. Due to the combination of the LOS path measurement information and the NLOS path measurement information, the positioning accuracy of the UE can be increased by using the NLOS path measurement information-assisted positioning.

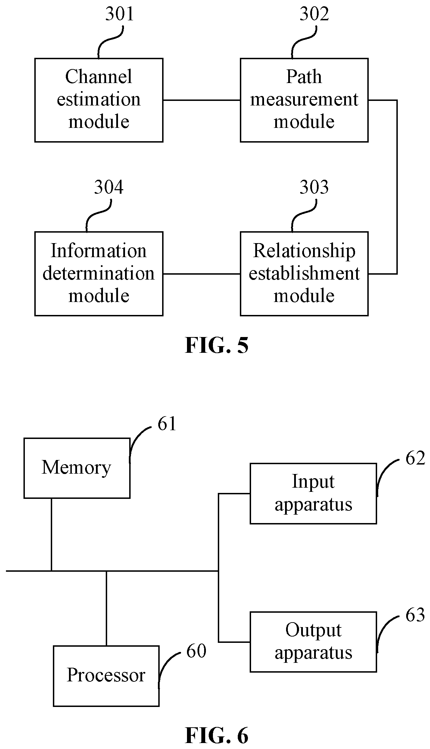

FIG. 5 is a structure diagram of a terminal positioning and sensing apparatus according to an embodiment of the present application. The apparatus may perform the terminal positioning and sensing method provided by any of the embodiments of the present application and has corresponding functional modules and beneficial effects for executing the method. The apparatus may be implemented by software and/or hardware. The apparatus provided by the embodiment of the present application specifically includes a channel estimation module 301, a path measurement module 302, a relationship establishment module 303, and an information determination module 304.

The channel estimation module 301 is configured to perform a channel estimation according to a received echo signal and acquire a channel parameter of the channel estimation.

The path measurement module 302 is configured to determine a LOS path measurement parameter and a NLOS path measurement parameter based on the channel parameter.

The relationship establishment module 303 is configured to determine an association relationship matrix of the LOS path measurement parameter and the NLOS path measurement parameter according to a preset echo geometric model.

The information determination module 304 is configured to determine positioning information and environment sensing information based on the association relationship matrix.

In the embodiment of the present application, the channel estimation module performs a channel estimation according to a received echo signal to determine a channel parameter, the path measurement module determines a LOS path measurement parameter and a NLOS path measurement parameter according to the channel parameter, the relationship establishment module determines an association relationship matrix of the LOS path measurement parameter and the NLOS path measurement parameter according to an echo geometric model, and the information determination module determines positioning information and environment sensing information by solving the association relationship matrix. In the embodiment of the present application, the determination of location information of a UE and the sensing of environment information are simultaneously achieved through LOS path measurement information and NLOS path measurement information, thereby increasing the positioning accuracy, enhancing the richness of communication information, and improving the usage experience of the user.

In some embodiments, the apparatus further includes an error module. The error module is configured to add an error vector to the association relationship matrix according to a preset measurement noise model.

In some embodiments, the channel parameter includes at least one of: a path gain, a Doppler frequency, a delay or an angle.

In some embodiments, the LOS path measurement parameter includes at least one of: a TDOA parameter, an FDOA parameter or an AOA parameter.

In some embodiments, the NLOS path measurement parameter includes at least one of: an AOA parameter or an AOD parameter.

In some embodiments, the positioning information includes the location information of the terminal and the velocity information of the terminal, and the environment sensing information includes the location information of the scatterer.

In some embodiment, the information determination module 304 is specifically configured to parse the association relationship matrix according to a WLS estimator to determine the positioning information and the environment sensing information.

The terminal positioning and sensing apparatus provided by the embodiment of the present application may perform the terminal positioning and sensing method provided by any of the embodiments of the present application and has corresponding functional modules and beneficial effects for executing the method.

FIG. 6 is a structure diagram of an electronic device according to an embodiment of the present application. The electronic device includes a processor 60 and a memory 61. The number of processors 60 in the electronic device may be one or more, and one processor 60 is illustrated as an example in FIG. 6. The processor 60 and the memory 61 in the electronic device may be connected via a bus or in other ways, and the connection via a bus is illustrated as an example in FIG. 6.

As a computer-readable storage medium, the memory 61 may be configured to store software programs, computer-executable programs and modules, such as programs corresponding to the terminal positioning and sensing method in the embodiments of the present application and modules (for example, the channel estimation module 301, the path measurement module 302, the relationship establishment module 303, and the information determination module 304) corresponding to the terminal positioning and sensing apparatus in the embodiments of the present application. The processor 60 runs the software programs, instructions, and modules stored in the memory 61 to perform function applications and data processing of the electronic device, that is, the preceding terminal positioning and sensing method is implemented.

The memory 61 may mainly include a program storage region and a data storage region, where the program storage region may store an operating system and a program required by at least one function, and the data storage region may store data created according to the use of the electronic device. In addition, the memory 61 may include a high-speed random-access memory and may further include a non-volatile memory, such as at least one disk memory, a flash memory, or another non-volatile solid-state memory. In some examples, the memory 61 may further include memories which are remotely disposed with respect to the processor 60, and these remote memories may be connected to the electronic device via a network. Examples of the preceding network include, but are not limited to, the Internet, an intranet, a local area network, a mobile communication network, and a combination thereof.

In some embodiments, the electronic device specifically is a base station or a base station cluster, and the base station or the base station cluster may be located at different locations in space.

An embodiment of the present application further provides a storage medium including computer-executable instructions. The computer-executable instructions are used for, when executed by a computer processor, performing a terminal positioning and sensing method.

In an embodiment, the terminal positioning and sensing method includes the following.

A channel estimation is performed according to a received echo signal, and a channel parameter of the channel estimation is acquired.

A LOS path measurement parameter and a NLOS measurement parameter are determined based on the channel parameter.

An association relationship matrix of the LOS path measurement parameter and the NLOS path measurement parameter is determined according to a preset echo geometric model.

Positioning information and environment sensing information are determined based on the association relationship matrix.

From the preceding description of embodiments, it is apparent to those skilled in the art that the present application may be implemented by software and necessary general-purpose hardware or may be implemented by hardware. Based on the above understanding, the solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the terminal positioning and sensing method in the embodiments of the present application.

It is to be noted that units and modules involved in the preceding apparatus embodiments are divided according to functional logic, and the division is not limited thereto as long as the corresponding functions can be implemented. In addition, the specific names of functional units are intended to distinguish between each other and are not intended to limit the scope of the present application.

It is to be understood by those of ordinary skill in the art that some or all procedures of the preceding method and function modules/units in the preceding apparatus or system may be implemented as software, firmware, hardware, and suitable combinations thereof.

In the hardware implementation, the division of the preceding function modules/units may not correspond to the division of physical components. For example, one physical component may have multiple functions, or one function or procedure may be performed jointly by several physical components. Some or all physical components are implementable as software executed by a processor such as a central processing unit, a digital signal processor or a microprocessor, are implementable as hardware, or are implementable as integrated circuits such as application-specific integrated circuits. Such software may be distributed on computer-readable media. The computer-readable media may include computer storage media (or non-transitory media) and communication media (or transitory media). As known to those of ordinary skill in the art, the term, computer storage media, includes volatile and non-volatile as well as removable and non-removable media implemented in any method or technology for storing information (such as computer-readable instructions, data structures, program modules, or other data). The computer storage media include, but are not limited to, RAMs, ROMs, electrically erasable programmable read-only memories (EEPROMs), flash memories or other memory technologies, compact disc read-only memories (CD-ROMs), digital versatile discs (DVDs) or other optical disc memories, magnetic cassettes, magnetic tapes, magnetic disk memories or other magnetic storage apparatuses, or any other media used for storing the desired information and accessible by a computer. Moreover, as known to those of ordinary skill in the art, the communication media generally include computer-readable instructions, data structures, program modules, or other data in carriers or modulated data signals transported in other transport mechanisms and may include any information delivery media.

## Claims

1. A terminal positioning and sensing method, comprising:

   performing a channel estimation according to a received echo signal, and acquiring a channel parameter of the channel estimation;
   determining a line-of-sight path measurement parameter and a non-line-of-sight path measurement parameter based on the channel parameter;
   determining an association relationship matrix of the line-of-sight path measurement parameter and the non-line-of-sight path measurement parameter according to a preset echo geometric model; and
   determining positioning information and environment sensing information based on the association relationship matrix.

2. The terminal positioning and sensing method of claim 1, further comprising:
   adding an error vector to the association relationship matrix according to a preset measurement noise model.

3. The terminal positioning and sensing method of claim 1, wherein the channel parameter comprises at least one of: a path gain, a Doppler frequency, a delay or an angle.

4. The terminal positioning and sensing method of claim 1, wherein the line-of-sight path measurement parameter comprises at least one of: a time-difference-of-arrival parameter, a frequency-difference-of-arrival parameter or an angle-of-arrival parameter.

5. The terminal positioning and sensing method of claim 1, wherein the non-line-of-sight path measurement parameter comprises at least one of: an angle-of-arrival parameter or an angle-of-departure parameter.

6. The terminal positioning and sensing method of claim 1, wherein the positioning information comprises location information of a terminal and velocity information of the terminal, and the environment sensing information comprises location information of a scatterer.

7. The terminal positioning and sensing method of claim 1, wherein determining the positioning information and the environment sensing information based on the association relationship matrix comprises:
   parsing the association relationship matrix according to a weighted least square estimator to determine the positioning information and the environment sensing information.

8. The terminal positioning and sensing method of claim 1, wherein the preset echo geometric model comprises at least one of:

   a line-of-sight path time-difference-of-arrival measurement parameter equation;
   a line-of-sight path frequency-difference-of-arrival measurement parameter equation;
   a line-of-sight path angle-of-arrival measurement parameter equation;
   a non-line-of-sight path angle-of-arrival measurement parameter equation; or
   a non-line-of-sight path angle-of-departure measurement parameter equation.

9. An electronic device, comprising:

   one or more processors; and
   a memory configured to store one or more programs, wherein the one or more programs, when executed by the one or more processors, cause the one or more processors to perform the terminal positioning and sensing method of any one of claims 1 to 8.

10. A computer-readable storage medium for storing a computer program, wherein when the computer program is executed by a processor, the terminal positioning and sensing method of any one of claims 1 to 8 is performed.

■UE   o Base station   ✳ Scatterer

**FIG. 1**

| Perform channel estimation according to a received echo signal, and acquire a channel parameter of the channel estimation | 110 |

↓

| Determine a line-of-sight path measurement parameter and a non-line-of-sight path measurement parameter based on the channel parameter | 120 |

↓

| Determine an association relationship matrix of the line-of-sight path measurement parameter and the non-line-of-sight path measurement parameter according to a preset echo geometric model | 130 |

↓

| Determine positioning information and environmental sensing information based on the association relationship matrix | 140 |

**FIG. 2**

Perform channel estimation according to a received echo signal, and acquire a channel parameter of the channel estimation ⟞ 210

↓

Determine a line-of-sight path measurement parameter and a non-line-of-sight path measurement parameter based on the channel parameter ⟞ 220

↓

Determine an association relationship matrix of the line-of-sight path measurement parameter and the non-line-of-sight path measurement parameter according to a preset echo geometric model ⟞ 230

↓

Add an error vector to the association relationship matrix according to a preset measurement noise model ⟞ 240

↓

Parse the association relationship matrix according to a WLS estimator to determine positioning information and environmental sensing information ⟞ 250

**FIG. 3**

BS-side echo signal → Channel estimation → LOS path measurement / NLOS path measurement $h=Gx^{\circ}$ → WLS estimator → $\underline{x}^{\circ}$

**FIG. 4**

301

302

Channel
estimation
module

Path
measurement
module

304

303

Information
determination
module

Relationship
establishment
module

**FIG. 5**

61

Memory

62

Input
apparatus

63

Output
apparatus

60

Processor

**FIG. 6**

## INTERNATIONAL SEARCH REPORT

| International application No. |
| --- |
| **PCT/CN2023/099928** |

| A. | CLASSIFICATION OF SUBJECT MATTER |
| --- | --- |
| | H04W 4/029(2018.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CJFD, CNTXT, ENTXTC, VEN: 非视距, 非LOS, 视距, 定位, 位置, 感知, 回波, 反射, 散射体, 目标, 到达角, 到达时间差, 到达频率差, 离去角, non line of sight, NLOS, line of sight, LOS, location, position, perception, echo, reflection, scatterer, target, angle of arrival, AOA, time difference of arrival, TDOA, frequency difference of arrival, FDOA, angle of departure, AOD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022113400 A1 (QUALCOMM INC.) 14 April 2022 (2022-04-14)<br>    description, paragraphs [0105]-[0134], and figures 5A-10 | 1-10 |
| X | US 2022107384 A1 (QUALCOMM INC.) 07 April 2022 (2022-04-07)<br>    description, paragraphs [0095]-[0124], and figures 5A-10 | 1-10 |
| A | CN 112986903 A (THE CHINESE UNIVERSITY OF HONG KONG, SHENZHEN) 18 June 2021 (2021-06-18)<br>    entire document | 1-10 |
| A | WO 2022022534 A1 (HUAWEI TECHNOLOGIES CO., LTD.) 03 February 2022 (2022-02-03)<br>    entire document | 1-10 |
| A | CN 114114150 A (SOUTHEAST UNIVERSITY) 01 March 2022 (2022-03-01)<br>    entire document | 1-10 |
| A | CN 114599086 A (BEIJING UNIVERSITY OF POSTS AND TELECOMMUNICATIONS) 07 June 2022 (2022-06-07)<br>    entire document | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 August 2023** | **23 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/099928**

| Patent document cited in search report | | | Publication date (day/month/year) | Patent family member(s) | | | Publication date (day/month/year) |
|---|---|---|---|---|---|---|---|
| US | 2022113400 | A1 | 14 April 2022 | WO | 2022077017 | A1 | 14 April 2022 |
| | | | | KR | 20230084161 | A | 12 June 2023 |
| US | 2022107384 | A1 | 07 April 2022 | WO | 2022076107 | A1 | 14 April 2022 |
| | | | | KR | 20230079082 | A | 05 June 2023 |
| CN | 112986903 | A | 18 June 2021 | | None | | |
| WO | 2022022534 | A1 | 03 February 2022 | BR | 112023001390 | A2 | 14 February 2023 |
| | | | | EP | 4179806 | A1 | 17 May 2023 |
| | | | | CN | 115804170 | A | 14 March 2023 |
| | | | | IN | 202327003813 | A | 17 March 2023 |
| CN | 114114150 | A | 01 March 2022 | | None | | |
| CN | 114599086 | A | 07 June 2022 | | None | | |

Form PCT/ISA/210 (patent family annex) (July 2022)